# EUROPEAN PATENT SPECIFICATION

(11) **EP 2 906 755 B1**
(45) Date of publication and mention of the grant of the patent: **04.10.2017**
(21) Application number: 13844664.6
(22) Date of filing: 07.10.2013
(51) Int. Cl.: E02B 15/04, B01F 3/08

(54) **DEVICE AND METHOD FOR DISPERSING OIL ON WATER**
VORRICHTUNG UND VERFAHREN ZUR DISPERGIERUNG VON ÖL AUF WASSER
DISPOSITIF ET PROCÉDÉ DE DISPERSION DE PÉTROLE SUR L'EAU

(30) Priority: 10.10.2012 NO 20121147
(43) Date of publication of application: 19.08.2015
(73) Proprietor: Sinvent AS, 7465 Trondheim (NO)
(72) Inventor: SØRSTRØM, Stein Erik, N-7021 Trondheim (NO); NORDTUG, Trond, N-7058 Jakobsli (NO)
(74) Representative: Olsen, Svein Arne
(86) International application number: PCT/NO2013/050168
(87) International publication number: WO 2014/058324

(56) References cited:
- EP-A2- 1 020 566
- WO-A1-81/02693
- CN-Y- 2 772 629
- GB-A- 2 160 190

## Description

The present invention relates to a vessel and method for dispersing oil on water.

More particularly, the present invention relates to the chemical-free dispersion of oil on water.

Oil spill in connection with discharges from the oil industry, shipping industry, etc. is a severe environmental problem which may lead to catastrophic consequences. Recent examples of oil spills are the blowout of BP's well in the Gulf of Mexico and the spill from the ship Full City outside of Langesund.

The alternatives presently available for handling such spill, preferably offshore, are the following: 1. mechanical collection of oil on water, 2. in-situ burning of oil on water and 3. chemical dispersion of oil on water.

The choice between these three techniques is based in part on national as well as local legislation and on a number of practical, environmental, and legislative considerations for each individual spill incident. The selection of preferred countermeasures is often dictated by what is feasible and acceptable under the prevailing conditions.

The chemical dispersion of oil on water is a commonly used oil spill control method. The method involves spraying "dispersant(s)" onto the oil slick floating on the surface, which is thereby dispersed into microscopic (micron-sized) droplets. These droplets are distributed in the water column either by way of natural turbulence (waves and current) or by using the propulsion system of a ship. Subsequently, naturally occurring currents and turbulence in the water will help diluting the oil slick so as to render it less damaging or even harmless to the environment. In this regard, it should be noted that during the spill in the Gulf of Mexico, several thousands metric tons of chemicals were applied to the oil slick, and accordingly the use of chemical dispersion of oil on water is controversial as the application of chemicals on oil slicks adds additional pollutants to the sea.

The use of chemicals is limited by the availability of chemicals, the effectiveness of the chemical, and the actual grade of the oil, as well as the application technology available. In spite of these considerations, chemical dispersion is a commonly used technique and is regarded as the dominating and most important technique in connection with most oil spill catastrophes all over the world.

The following disadvantages and limitations with the use of chemical dispersion should be mentioned:
The dispersant contains ingredients that are detrimental to the environment. Relatively large amounts of dispersant are used in a contingency operation. The dispersant must be transported to the application site, which is often a limiting factor in the carrying out of the operation.
After some time on water, the oil changes properties and as a result will no longer be chemically dispersible (it becomes viscous and absorbs water, which reduces or eliminates the feasibility of chemical dispersion).
The public opinion (various interest groups) is often opposed to the use of chemicals, so that the method is disputed.

It should also be noted that methods and arrangements for minimizing the use of dispersants exist. In this regard reference is made to the publication US 4228668 A, in which oil and water is homogenized through the use of ultrasound energy to minimize the use of dispersants. The oil is mixed into the water body and in this manner the damages is to be significantly reduced.

GB 2038651 A discloses a method of dispersing oil in water by means of ultrasound vibrations. Several vibration generating apparatuses are installed on a vessel. It is also suggested that the apparatuses are used together with a solvent.

FR 2694737 discloses a catamaran for cleaning water, having a ramp with adjustable nozzles. The main purpose of the equipment is to collect floating waste, using fluid in the nozzles which is selectable from water, air, or dispersant.

US 3532622 A discloses and claims the use of chemical dispersants in order to form an oil-in-water dispersion. The spray nozzles are disposed at a significant distance from the water surface at which spilled oil is to be treated. High pressure nozzles, instead of fan pumps, are used for emulsifying the oil to small droplets and the gradation of the jet directly in proportion to the concentration of oil is accomplished through a constant laterally oscillating angular movement of the jets.

WO-A-81/02693 discloses a vessel and a method for dispersing oil on water having the features of the preamble of claim 1 and claim 14 respectively. In particular it concerns a method and apparatus for combatting water-borne oil pollution, such as an oil slick, by spraying the polluted region with and oil-dispersant composition from one or more double swirl chamber nozzles. Such a nozzle has a primary swirl chamber into which the liquid to be sprayed is introduced tangentially to swirl therein. The primary swirl chamber terminates in a primary orifice constituting the entry to a secondary swirl chamber in which the swirling motion of the droplets produced in the primary chamber is slowed down and the droplets agglomerate. The droplets leaving the double swirl chamber nozzles are of larger droplet size and narrower droplet size distribution than the droplets leaving a conventional nozzle. The spray produced by the double swirl chamber nozzles is less susceptible to drift and more certain coverage of the polluted area can be achieved. The apparatus may be mounted on an air-borne vehicle or a water-borne vehicle such as a tug, and, in the latter case, may include a plurality of conventional nozzles for spraying with water the polluted region already sprayed by the double swirl chamber nozzle(s), thereby to agitate the region and mix the dispersant with the pollution.

An object of the present invention is to provide a new and efficient solution for handling oil spill on water, preferably offshore.

A second object is that the solution is to be environmentally friendly and hence not discharge environmentally harmful substances into the surrounding water body, i.e. the present solution shall be free of chemicals.

A third object is that the solution for handling oil spill on water, i.e. oil slicks, shall be simple and cost-efficient. The arrangement needed for handling the oil spill is to be simple and inexpensive to produce and also have low operating costs in use. Operation of the device shall be simple and efficient with respect to handling of large volumes of oil spill.

A fourth object is that the device shall have a flexible configuration so that it can be used on many different vessels, i.e. both on specially designed vessels and on conventional vessels.

The objects of the present invention are achieved by a vessel for dispersing oil on water, according to claim 1. Preferred embodiments of the vessel are set forth in more detail in claims 2 through 13.

The objects of the present invention are further achieved by a method of dispersing oil on water, according to claim 14. In the following, an embodiment of the present invention will be explained with reference to the attached drawings, in which:
Fig. 1 schematically shows a device for dispersing oil on water mounted in a front part of a vessel,

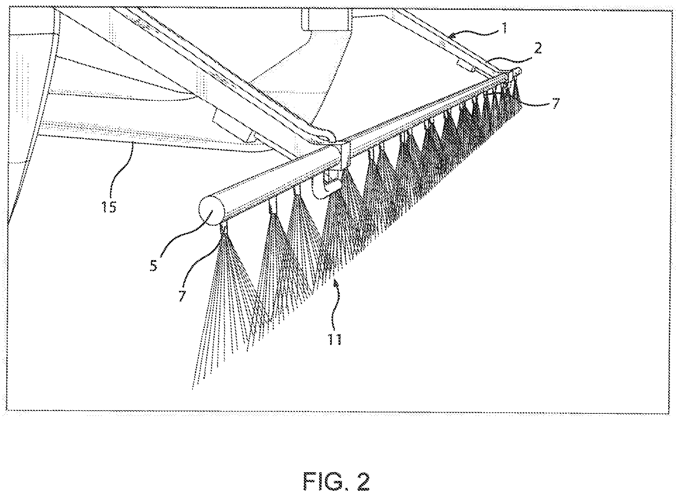

Fig. 2 shows a more detailed view of the dispersing device during operation,
Fig. 3 shows the vessel with the device in operation for handling an oil spill on water,
Fig. 4 shows the vessel with the device in a non-operative position, in a transport configuration, for example,
Fig. 5 schematically shows initial tests in a plexiglass tube,
Fig. 6 shows the droplet size distribution in the plexiglass tube experiment before, during and after a high pressure flushing treatment,
Fig. 7 shows a droplet cloud formed during treatment of the oil by a high pressure jet in the plexiglass tube experiment,
Fig. 8 schematically shows a meso-scale flume, with test data indicated in the square,
Fig. 9a shows the experiment setup in the meso-scale flume, in a side view, with application at an angle of 90 degrees from a height of 50 cm,
Fig. 9b shows a front view of Fig. 9a,
Fig. 10a shows the experiment setup in the meso-scale flume, in a side view, with application at an angle of 45 degrees from a height of 25 cm,
Fig. 10b shows a front view of Fig. 10a,
Fig. 11 a shows the experiment setup in the meso-scale flume, in a side view, with application at an angle of 90 degrees from surface level (zero height), Fig. 11b shows a front view of Fig. 11a, and
Fig. 12 shows the droplet size distribution before, during and after the treatment of oil by nozzles positioned at the water surface in the flume testing tank.

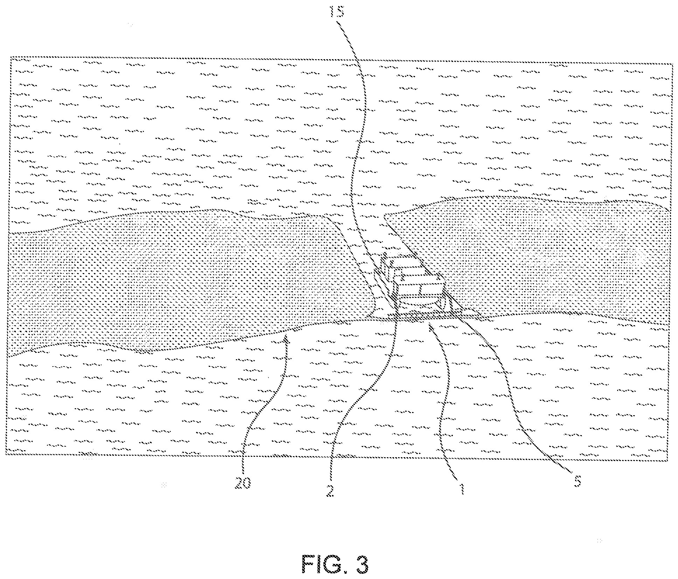

Referring to the drawings, an embodiment of the invention in the form of a device 1 and method for dispersing oil 20 on water will be explained. The device 1 includes a rig structure 2 for being mounted preferably in a front part of a vessel 15. Rig structure 2 further includes a front transverse structure 5. Preferably, the front transverse structure 5 spans the entire width of the vessel. Fig. 3 shows an embodiment of the front transverse structure 5 having an extent that exceeds the width of the vessel so that it will cover an area wider than the width of the ship. In this connection, it is also noted that in other embodiments, the transverse structure 5 may have an extent smaller than the width of the vessel. The transverse structure 5 is further provided with a number of nozzles 7 for flushing with high pressure water 11 supplied from a high pressure facility 10 located on the vessel 15. In this connection, it should be noted that the number of nozzles 7 may vary depending the configuration of the nozzle(s) and area of application, for example.

Preferably, high pressure facility 10 will use water from the surrounding water body, which may be seawater or freshwater depending on the location at which the vessel operates. High pressure facility 10 further uses a pressure generator whereby water is provided at ultra-high pressure to nozzles 7.

In the present case, rig structure 2 is shown moveably mounted to the vessel whereby the distance from the water surface of nozzles 7 is adjustable. The direction of nozzles 7 and the pressure of the high pressure water are also adjustable so that dispersed oil droplets within a preferred or optimum micron-size range of, preferably, 5-40 µm are obtained.

It is noted that rig structure 5 could also be provided with pneumatic and ultrasound arrangements that further increases the oil dispersion efficiency.

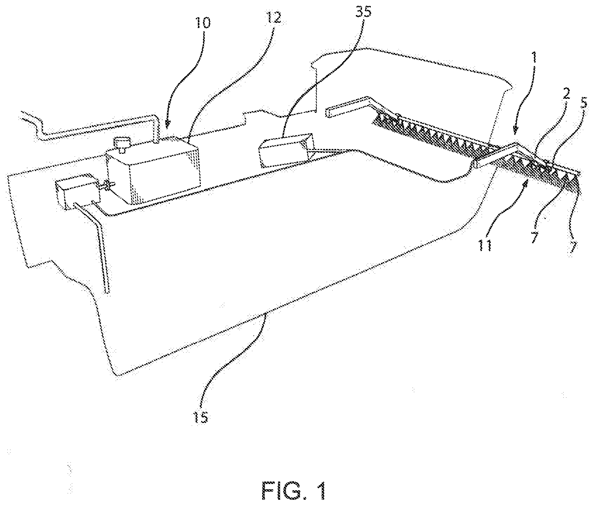

Referring to Fig. 1, rig structure 2 is further connected to an additive storage tank 35. As shown in the figure, the additives are carried directly from storage tank 35 into high pressure water 11 for nozzles 7. It should be noted, however, that the additives could be carried directly from storage tank 35 to suitable additive nozzles provided on the front transverse structure 5. A combination of directly supplying the additives into high pressure water for the nozzles and supplying to separate additive nozzles provided on the transverse structure 5 is also contemplated. In order to achieve a mechanical impact, particles must be carried directly from a storage tank into the water flow to the nozzles. In principle, other additives could be sprayed from separate nozzles without involving the high pressure water 11 for nozzles 7. The additives or materials can be particles, bacteria, nutrients, etc.

In the case of handling oil spill on water, the vessel will be prepared for operation in that rig structure 2 and nozzles 7 as well as the pressure of the high pressure water are adjusted and regulated and optimized so as to obtain dispersed oil droplets of the desired micron-range size.

Fig. 3 shows the vessel 15 with the device 1 during in for dispersing oil 20 on water (an oil slick). By means of device 1, the oil is dispersed into oil droplets within a micron-size range at the front of the vessel. The oil droplets will be further mixed into the water body by the forward movement of the vessel. The result thereof is that the oil slick is broken into micron-size droplets, after which natural currents and turbulence in the water body further help diluting the oil cloud so that it becomes less damaging or even harmless to the environment.

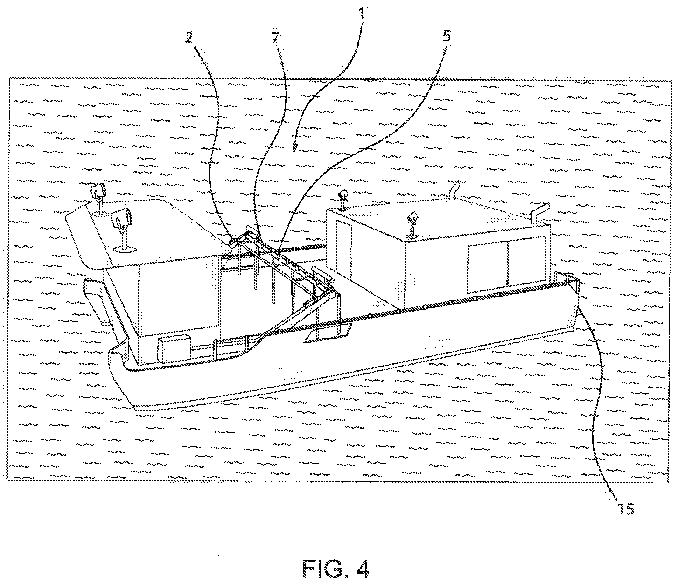

Fig. 4 shows the vessel 15 with the device 1 in a non-operative configuration during transport to the operation site or to shore, for example.

It is noted that the principle of using high pressure water flushing for dispersing oil is novel and that it leads to a surprising effect in that an oil slick is broken into micron-sized droplets without any use of chemical dispersants.

The dispersion of oil on water using a device according to the present invention is hence very efficient and may replace large parts of the current chemical dispersion means.

Conventionally, the treatment of oil spill on water has been carried out by way of chemical dispersion. The formation of droplets smaller than 70 microns has been used as a criterion for successful dispersion treatment. In connection with the present application, extensive testing has been carried out in order to determine whether treatment of surface oil by way of high pressure spraying is efficiently able to produce droplets meeting the above criterion. The test was carried out in Sintefs meso-scale flume.

The oil was treated using different techniques:
- Flushing onto the oil from a height above the water at an angle of 90 degrees.
- Flushing onto the oil from a height above the water at an angle of 45 degrees.
- Flushing directly into the water at the water surface.
The latter test gave the best measurable result. Droplets having an average droplet diameter of 20 microns were formed, and only small amounts oil were observed to make it through the system without being treated. The two tests involving application of treatment from a height above water did not yield measurable results. Also, the pressure used in these tests was limited by the insufficient dimensions of the particular testing tank used.

Conventionally, dispersant has been used in oil spill incidents (catastrophes) in order to improve the breakdown of the oil into small droplets. The smaller droplets will assist in removing the thick oil slick by diluting and dispersing it. Experience from field testing has indicated that the mechanical handling of oil may provide for sufficient shearing of the oil to disperse it from the sea surface.

The use of chemical dispersion of oil on water is restricted by local regulations, the availability of chemicals, the efficacy of chemicals on the oil grade in question, as well as the application technology available. The present methodology provides for a chemical-free solution for dispersing oil on water by using an ultra-high pressure water jet solution applicable for small, medium, and large oil and chemical spills. The use of chemical dispersing agents is presently one of the main countermeasures against oil spill. Today, no non-chemical method exists that is applicable for dispersing oil on water.

Some important facts regarding the use of chemical dispersing agents;
- The use of chemical dispersion of oil and water is controversial.
- The use of chemicals is limited by their availability.
- Large amounts of dispersant may be applied in an oil spill emergency operation.
- The cost of the chemical dispersant is another problem, with a cost per litre of more than NOK 30.
- During the accident in the Gulf of Mexico about 7000 metric tons of chemicals were applied to the oil slick.
- The efficacy of chemicals on the oil grade in question as well as the available application technology is a limiting factor.
A pilot project was carried out with the aim of testing the concept and documenting the feasibility of the concept. The present concept has been developed subsequent to two prior projects for the oil industry and the Research Council of Norway.

A limited research has been conducted in order to evaluate the feasibility of using high pressure nozzles as a means of dispersing oil from the sea surface. Initial testing was performed in a small plexiglass tank to document the ability of the nozzles to produce droplets of a desired size. A series of large scale tests was carried out in order to study the efficacy of different oil treatment techniques involving high pressure flushing.

In all tests, the droplet size distribution was monitored using the instrument LISST 100X (Sequoia Scientific). The instrument uses laser diffraction in the determination of the size distribution. The droplet sizes are classified as concentrations within 32 size bins from 2.5 to 500 microns.

The oil used is a lightly evaporated asphaltenic north sea oil.

Flushing was effected by flushing nozzles (Washjet HSS 1/4MEG 2506 from Spraying Systems Company), which created a fan-shaped flushing jet with an angle of 29 degrees. Pressurized water was supplied by a Kärcher HD 10/25 high pressure cleaner. The pressure was controlled by a needle valve and measured by a manometer located just before the nozzle(s).

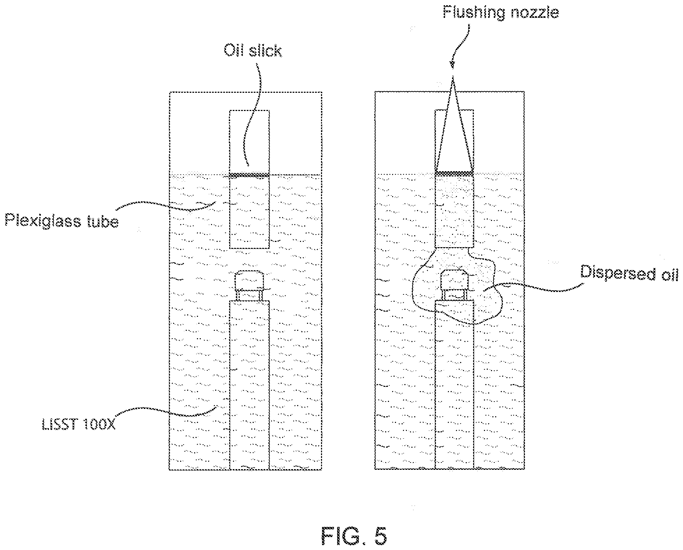

Initial testing was carried out in a small plexiglass tank (diameter = 40 cm, height = 100 cm) in order to document the ability of the nozzles to produce droplets of the desirable size. An oil layer of 1 mm was contained within a plexiglass tube having a diameter of 10 cm. Flushing was conducted through a nozzle at about 15 bar on the inside of the tube. The small droplets formed escaped below the tube and into the testing tank. The measurement system for LISST 100X was positioned right under the tube, in order to document the size distribution of the droplets formed. In this regard, reference is made to Fig. 5.

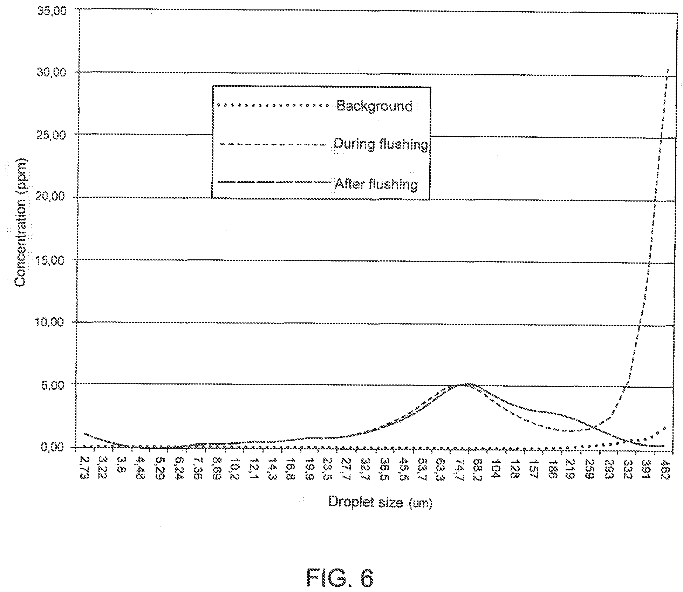

Even though the oil was confined within the plexiglass tube, the oil was pushed around on the surface by the flushing treatment. This rendered difficult the quantitative dispersion of the oil, and most of the oil still remained on the surface after the test. Enough droplets were formed to document that the energy of the system was sufficient to produce droplet sizes within the definition of dispersed oil (approximately 70 microns). The resulting droplet size distribution is shown in Fig. 6.

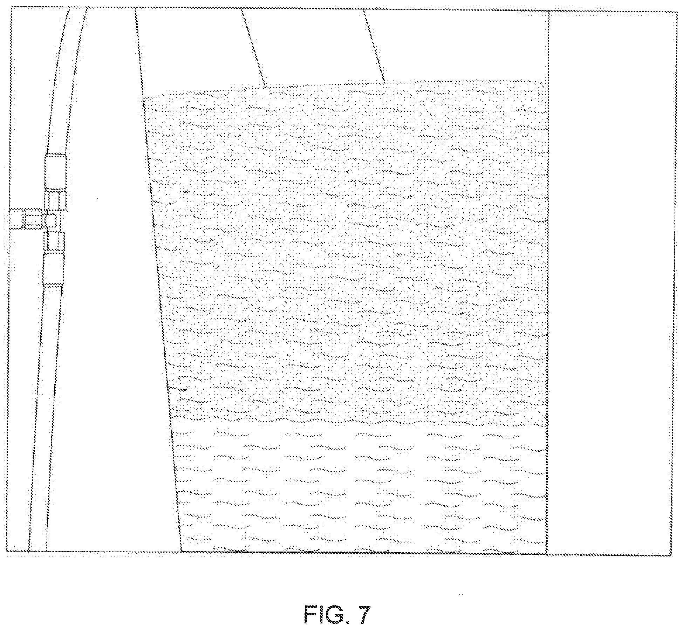

The result shows a binominal droplet distribution during the flushing treatment. The large droplets with a peak value above the detection limit of the instrument (> 500 microns) are most likely a combination of entrained air bubbles and oil droplets that have not been effectively processed in the high pressure flushing treatment. As the flushing is started, the larger droplets are precipitated and leave only a smaller of the two distributions in the water column. The droplets left in the water after the treatment exhibit a wide droplet size distribution with a peak value of approximately 75 microns. The distribution documented was visually evaluated to be dispersed oil, cf. Fig. 7.

Three larger tests were carried out in order to study the efficiency of different oil treatment techniques.
1) Application at an angle of 90 degrees from a height of 50 cm
2) Application at an angle of 45 degrees from a height of 25 cm
3) Application at an angle of 90 degrees at water surface level

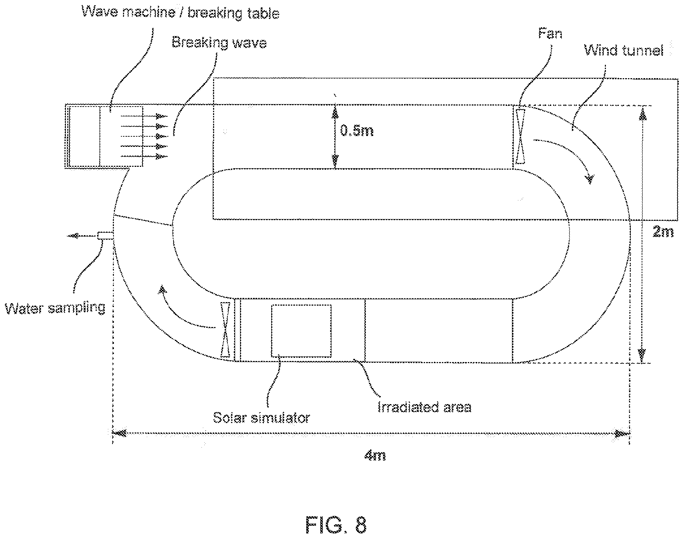

All tests were performed in Sintefs meso-scale flume. A schematic drawing of the flume is shown in Fig. 8.

The flume basin has a width of 0.5 meters and a depth of 1 meter and the overall length of the flume is about 10 meters. The total volume of the tank is 4.8 cubic meters of sea water. Two fans disposed in a covered wind tunnel control the wind velocity. A wave generator is used for generating waves of a controlled wave energy input. The tests were carried out in front of the wave generator and droplet size measurements were taken just inside the first tank of the test tank. The testing region is indicated by the square in the figure.

Two flushing nozzles were mounted side by side at a distance 50 cm above the water surface in the test tank. At this height the nozzles produced a continuous flushing line across the width of the tank. The three experiments are described separately below.

### Application at an angle of 90 degrees from a height of 50 cm

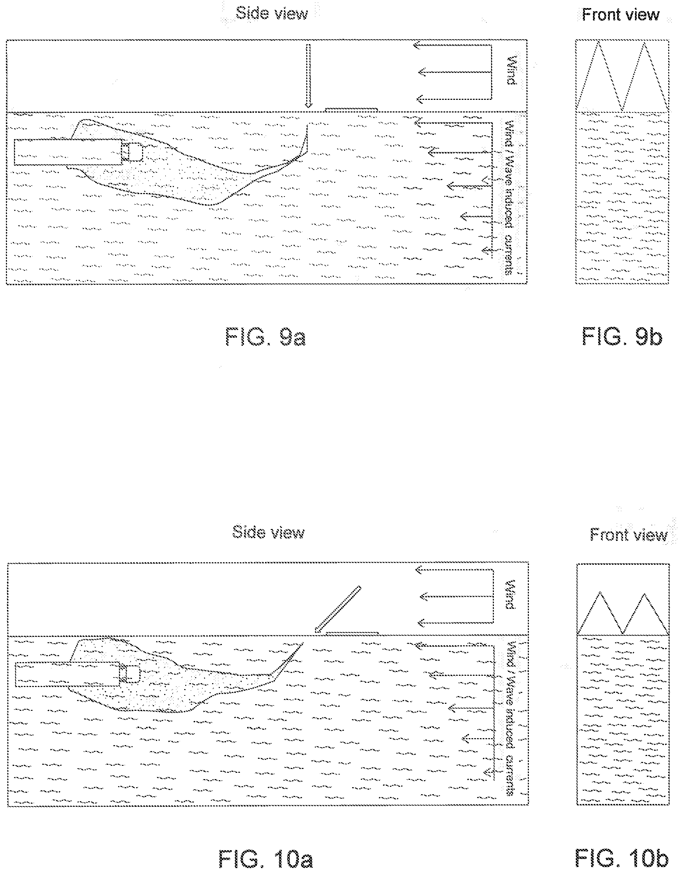

The nozzle pair was positioned 50 cm above water level and worked perpendicularly to the axis. Water was supplied at a pressure of up to 20 bars. In this regard, reference is made to Figs. 9a and 9b.

An amount of air was entrained into the water as the jet hit the surface. A surface current was carried up by the jet itself, and as a result of resurfacing of the air bubbles. The current generated was stronger than the wind/wave induced currents in the test tank and the oil was not able to passively pass through the water jet. Attempts were made to capture the oil between the two barriers and to move the nozzles through the oil spill. This was a more successful approach, but a portion of the oil was still pushed away by the surface current induced. Due to the high energy in the water surrounding the jet, large droplets were also mixed into the water, but were immediately carried to the surface on exit from the turbulent area during the flushing. When a high concentration of small droplets is formed, a light brown cloud is assumed to form in the water. The formation of a droplet could not be observed visually in this experiment. LISST 100X was not able to detect elevated droplet concentrations that could be discerned from the background noise in the test tank.

### Application at an angle of 45 degrees from a height of 25 cm

The nozzle pair was positioned 25 cm over water level and worked at an angle of 45 degrees to the surface. At half the angle and half the height, the flushing still produced a continuous flushing line spanning the width of the test tank. The angle was changed in order to address the problem of counteracting currents. The jet worked more in the direction of the wind/wave induced currents and the air bubbles surfaced further away from the jet. Also, at the 45 degrees angle, the flushing treatment (jets) was observed to "bounce off" the surface instead of penetrating it. This means that part of the energy was converted to a horizontal and upward movement. The flushing pressure was limited to 16 bar in order to reduce the amount of water flushed back into the air. In this regard, reference is made to Fig. 10a and Fig. 10b.

Some turbulence still formed in front of the water jet. This turbulence prevented the oil from passing through when no wind or wave action was applied. As the wind and the wave generators were turned on, the oil moved slowly into the jet. Some of the oil was immediately converted to a brownish cloud when it passed through the jet. Most of the oil, however, passed through the jet as spots on surface oil or as large droplets. LISST 100X was not able to detect elevated droplet concentrations that could be discerned from the background noise in the test tank.

### Application at an angle of 90 degrees at the water surface level

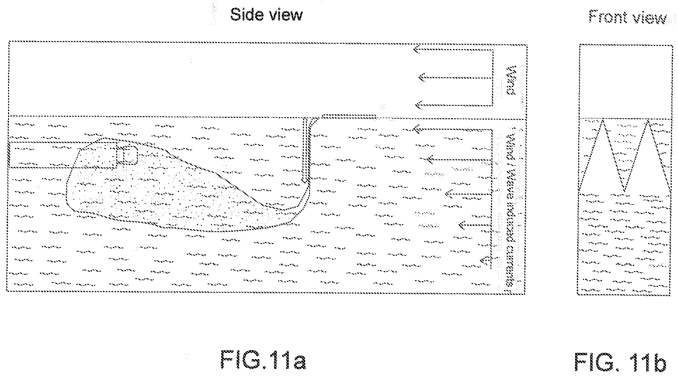

In order to minimize the air entrainment and to maximize the energy transferred into the water, the system was positioned at the water surface so as to flush down into the water at an angle of 90 degrees. The reduced height also allowed the use of a higher pressure so the system was operated at 35 bars. In this regard, reference is made to Fig. 11 a and Fig. 11 b.

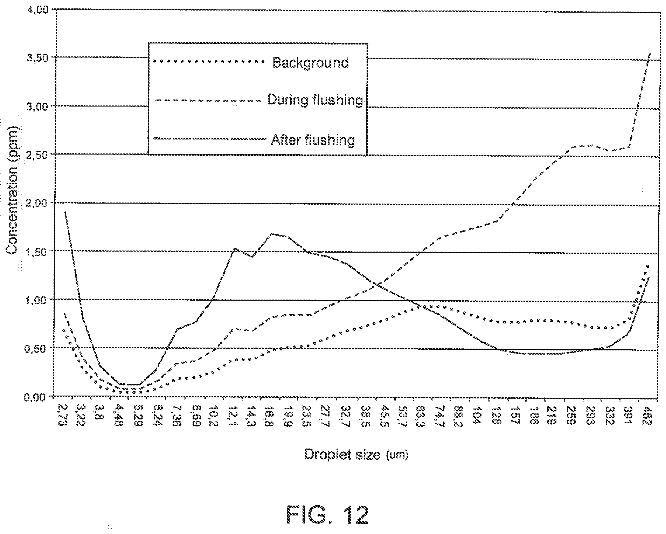

The nozzle system was arranged at the water surface and oil flow, therefore, was prevented by the application system itself. Consequently, oil was concentrated upstream of the nozzles. After the high pressure flushing was activated, parts of spots were pulled into the two jets. Only small amounts of oil were observed to pass through the system without being "treated" by the high pressure jet. The formation of light brown clouds could be observed immediately when the oil entered into the system. This observation could also be documented by measurements using LISST 100X, cf. Fig. 12.

During the treatment with high pressure flushing the droplet size distribution has a peak above the detection limit of LISST 100X. This is assumed to be mainly due to the air bubbles entrained in the water. After the flushing was stopped, the large droplets were precipitated and a distribution having a maximum diameter of 20 microns was left in the water.

LISST 100X does not discern between oil droplets and water bubbles. Therefore, a water sample was obtained subsequent to the flushing treatment in order to document that the concentrations measured were actually oil. The samples were extracted and analyzed for total oil in a spectrometer. The concentration was found to be 38ppm. The net concentration measured by LISST 100X was 29ppm (sum of the concentration within all the reported size bins). This indicates that most droplets registered by LISST are oil droplets.

A limited number of treatment methods for treating surface oil by way of high pressure flushing were tested in the channel test tank.

Flushing directly into the water at a pressure of 35 bars resulted in the best documented effect. Only small amount s of oil were observed to be make it through the system without being treated by the jet. Droplets formed following the flushing treatment were measured to have a mean volume distribution of 20 microns. As mentioned earlier, a typically used criterion for the success of a dispersion operation (treatment with chemicals) is the formation of droplets having an average droplet diameter of less than 70 microns.

Flushing from a distance above the water surface resulted in the entrainment of an amount of air bubbles in the water. The air bubbles that returned to the surface together with the energy from the flushing induced an outwelling current that helped pushing the oil away from the flushing line. This problem was partially addressed by applying the flushing treatment at an angle. Application at an angle made it easier to have the oil enter into the flushing line. The angle of 45 degrees, however, made the flushing treatment "bounce off' of the water surface and a portion of the downward acting force from the jet was lost. The meso-scale flume turned out to be under-dimensioned for this type of testing. Both tests involving application from a height had to be carried out at a limited pressure, in order to avoid damaging equipment in the testing tank.

The experiments led to the following key conclusions;
- It is possible to efficiently disperse oil by using a high pressure water jet system.
- The final configuration of the system can be further developed.
- It is necessary to study the impact of different types of oil and weather conditions, but it is assumed that such factors will be of less importance here than with the alternative technique using chemical dispersants.
- The system may be incorporated into different oil spill control systems (small/large scale, small/large vessels).

Based on the studies conducted we have found that the prerequisites for the proper operation of chemical-free high pressure water jet systems are the following;
1) It is necessary that the system delivers an ultrahigh pressure water jet, preferably above 30-40 bars per nozzle. This places strict requirements on the high pressure water supply system as well as to the design of the nozzles as well as the internal configuration of the individual nozzles.
2) It is necessary that the water fan from each nozzle is concentrated in order to reduce the amount of air pulled down together with the water jet.
3) It is necessary that the nozzle outlet is located near the water surface. 0-20 cm would be desirable, but the distance can be increased if the water pressure is increased and/or the concentration of water jets is increased (narrow fan). The closer to the surface the water fan is, the wider it can be, and it has been found that it is possible to tune the combination of surface distance and water fan (jet) width.
4) In order to be able to cover a large surface area the nozzle should be arranged in a stand that allows a certain width of water to be covered as the vessel carrying the system moves through the oil slick on the surface.

## Claims

1. A vessel (15) for dispersing oil (20) on water, comprising:
a rig structure (2) mounted on the vessel (15), preferably in a front part thereof, the rig structure (2) including a front transverse structure (5) provided with nozzles (7) for flushing with high pressure water (11) supplied from a high pressure facility (10) located on the vessel (15),
**characterized in that** the direction and distance of the nozzles (7) to the water surface as well as the pressure of the high pressure water (11) are adjustable, the number of nozzles (7) being chosen so that a large number of high pressure, narrow jet nozzles are used for larger distances from the water surface, and a smaller number of wider-jet nozzles are used for smaller distances from the water surface, whereby dispersed oil droplets within a micron-size range are obtained, and the oil droplets are mixed into a body of water by the forward motion of the vessel (15).

2. The vessel (15) of any of the preceding claims,
**characterized in that** the rig structure (5) is further provided with pneumatic and ultrasound arrangements.

3. The vessel (15) of any of the preceding claims,
**characterized in that** flushing is carried out at a preferred pressure of 35 bar per nozzle (7).

4. The vessel (15) of any of the preceding claims,
**characterized in that** the high pressure facility (10) uses water from a surrounding body of water.

5. The vessel (15) of any of the preceding claims,
**characterized in that** the body of water is seawater.

6. The vessel (15) of any of the preceding claims,
**characterized in that** the body of water is freshwater.

7. The vessel (15) of any of the preceding claims,
**characterized in that** the high pressure facility (10) uses a pressure generator whereby the water is provided at ultrahigh pressure to the at least one nozzle (7).

8. The vessel (15) of any of the preceding claims,
**characterized in that** the rig structure (2) is rigidly mounted with fixed positions relative to the vessel.

9. The vessel (15) of claim 1,
**characterized in that** the rig structure (2) is moveably mounted to the vessel (15).

10. The vessel (15) of any of the preceding claims,
**characterized in that** the rig structure (2) is further connected to an additive storage tank (35).

11. The vessel (15) of claim 10,
**characterized in that** the additives are provided directly from the storage tank (35) into the high pressure water (11) for the nozzle(s) (7).

12. The vessel (15) of claim 10,
**characterized in that** the additives are provided directly from the storage tank (35) to separate additive nozzles provided on the front transverse structure (5).

13. The vessel (15) of claims 10, 11, or 12,
**characterized in that** the additives are at least one of the following: particles, bacteria, nutrients, and chemicals.

14. A method of dispersing oil (20) on water, comprising:
a rig structure (2) mounted preferably in a front part of a vessel (15), the rig structure (2) including a front transverse structure (5) provided with nozzles (7) for flushing with high pressure water (11) supplied from a high pressure facility (10) located on the vessel (15), **characterized in that** the direction and distance of the nozzles (7) to the water surface as well as the pressure of the high pressure water (11) is adjusted, the number of nozzles (7) being selected so that a large number of high pressure, narrow jet nozzles are used for larger distances from the water surface and a smaller number of wider-jet nozzles are used for small-ler distances from the water surface, whereby dispersed oil droplets within a micron-size range are obtained, and the oil droplets are mixed into a body of water by the forward motion of the vessel.

## Patentansprüche

1. Schiff (15) zum Verteilen von Öl (20) auf Wasser, umfassend:
eine Riggstruktur (2), die auf dem Schiff (15) montiert ist, vorzugsweise an einem Vorderteil dessen,
wobei die Riggstruktur (2) eine Vordertransversalstruktur (5) umfasst, die mit Spritzdüsen (7) zum Durchspülen mit Hochdruckwasser (11) ausgestattet ist, das aus einer Hochdruckanlage (10) bereitgestellt wird, die auf dem Schiff (15) angeordnet ist,
**dadurch gekennzeichnet, dass** die Richtung und Entfernung der Spritzdüsen (7) von der Wasseroberfläche sowie der Druck des Hochdruckwassers (11) anpassbar sind, wobei die Anzahl der Spritzdüsen (7) so ausgewählt wird, dass eine große Anzahl von Hochdruck-, Schmalstrahl-Spritzdüsen für größere Entfernungen von der Wasseroberfläche verwendet wird, und eine kleinere Anzahl von Breitstrahl-Spritzdüsen für kleinere Entfernungen von der Wasseroberfläche verwendet wird, wodurch dispergierte Öltröpfchen in einem Mikrometer-Bereich erhalten werden, und wobei die Öltröpfchen in einen Körper von Wasser mittels der Vorwärtsbewegung des Schiffs (15) gemischt werden.

2. Schiff (15) nach einem der vorhergehenden Ansprüche,
**dadurch gekennzeichnet, dass** die Riggstruktur (5) weiterhin mit Pneumatik- und Ultraschallvorrichtungen ausgestattet ist.

3. Schiff (15) nach einem der vorhergehenden Ansprüche,
**dadurch gekennzeichnet, dass** Durchspülen bei einem bevorzugten Druck von 35 Bar pro Spritzdüse (7) ausgeführt wird.

4. Schiff (15) nach einem der vorhergehenden Ansprüche,
**dadurch gekennzeichnet, dass** die Hochdruckanlage (10) Wasser aus einem umgebenden Körper von Wasser verwendet.

5. Schiff (15) nach einem der vorhergehenden Ansprüche,
**dadurch gekennzeichnet, dass** der Körper von Wasser Meerwasser ist.

6. Schiff (15) nach einem der vorhergehenden Ansprüche,
**dadurch gekennzeichnet, dass** der Körper von Wasser Süßwasser ist.

7. Schiff (15) nach einem der vorhergehenden Ansprüche,
**dadurch gekennzeichnet, dass** die Hochdruckanlage (10) einen Druckgenerator verwendet, wodurch das Wasser unter Ultrahochdruck der mindestens einen Spritzdüse (7) bereitgestellt wird.

8. Schiff (15) nach einem der vorhergehenden Ansprüche,
**dadurch gekennzeichnet, dass** die Riggstruktur (2) starr mit festgelegten Positionen relativ zu dem Schiff montiert ist.

9. Schiff (15) nach Anspruch 1,
**dadurch gekennzeichnet, dass** die Riggstruktur (2) bewegbar auf dem Schiff (15) montiert ist.

10. Schiff (15) nach einem der vorhergehenden Ansprüche,
**dadurch gekennzeichnet, dass** die Riggstruktur (2) weiterhin mit einem Zusatzstoffspeichertank (35) verbunden ist.

11. Schiff (15) nach Anspruch 10,
**dadurch gekennzeichnet, dass** die Zusatzstoffe direkt von dem Speichertank (35) in das Hochdruckwasser (11) für die Spritzdüse(n) (7) bereitgestellt wird.

12. Schiff (15) nach Anspruch 10,
**dadurch gekennzeichnet, dass** die Zusatzstoffe direkt von dem Speichertank (35) an separate Zusatzstoffspritzdüsen auf der Vordertransversalstruktur (5) bereitgestellt werden.

13. Schiff (15) nach den Ansprüchen 10, 11, oder 12,
**dadurch gekennzeichnet, dass** die Zusatzstoffe mindestens eines der folgenden sind: Teilchen, Bakterien, Nährstoffe, und Chemikalien.

14. Verfahren zum Verteilen von Öl (20) auf Wasser, umfassend:
eine Riggstruktur (2), die vorzugsweise in einem Vorderteil eines Schiffs (15) montiert ist, wobei die Riggstruktur (2) eine Vordertransversalstruktur (5) umfasst, die mit Spritzdüsen (7) zum Durchspülen mit Hochdruckwasser (11) ausgestattet ist, das aus einer Hochdruckanlage (10) bereitgestellt wird, die auf dem Schiff (15) angeordnet ist, **dadurch gekennzeichnet, dass** die Richtung und Entfernung der Spritzdüsen (7) von der Wasseroberfläche sowie der Druck des Hochdruckwassers (11) angepasst werden, wobei die Anzahl der Spritzdüsen (7) so ausgewählt wird, dass eine große Anzahl von Hochdruck-, Schmalstrahl-Spritzdüsen für größere Entfernungen von der Wasseroberfläche verwendet wird und eine kleinere Anzahl von Breitstrahl-Spritzdüsen für kleinere Entfernungen von der Wasseroberfläche verwendet wird, wodurch dispergierte Öltröpfchen in einem Mikrometer-Bereich erhalten werden, und wobei die Öltröpfchen in einen Körper von Wasser mittels der Vorwärtsbewegung des Schiffes gemischt werden.

## Revendications

1. Navire (15) pour disperser du pétrole (20) sur l'eau, comprenant :
une structure de plate-forme (2) montée sur le navire (15), de préférence dans une partie frontale de celui-ci, la structure de plate-forme (2) comprenant une structure transversale avant (5) pourvue de buses (7) permettant de rincer avec de l'eau sous haute pression (11) fournie depuis une installation à haute pression (10) située sur le navire (15),
**caractérisé en ce que** la direction et la distance des buses (7) par rapport à la surface d'eau ainsi que la pression de l'eau sous haute pression (11) sont réglables, le nombre de buses (7) étant choisi de sorte qu'un grand nombre de buses à jet étroit à haute pression sont utilisées pour les distances plus grandes par rapport à la surface de l'eau, et un nombre plus petit de buses à jet plus large sont utilisées pour les distances plus petites par rapport à la surface de l'eau, moyennant quoi des gouttelettes de pétrole dispersées au sein d'une plage de taille micrométrique sont obtenues, et les gouttelettes de pétrole sont mélangées dans une étendue d'eau par le mouvement vers l'avant du navire (15).

2. Navire (15) selon l'une quelconque des revendications précédentes,
**caractérisé en ce que** la structure de plate-forme (5) comporte en outre des dispositifs pneumatiques et ultrasonores.

3. Navire (15) selon l'une quelconque des revendications précédentes,
**caractérisé en ce que** le rinçage est effectué à une pression préférée de 35 bar par buse (7).

4. Navire (15) selon l'une quelconque des revendications précédentes,
**caractérisé en ce que** l'installation à haute pression (10) utilise de l'eau provenant d'une étendue d'eau voisine.

5. Navire (15) selon l'une quelconque des revendications précédentes,
**caractérisé en ce que** l'étendue d'eau est de l'eau de mer.

6. Navire (15) selon l'une quelconque des revendications précédentes,
**caractérisé en ce que** l'étendue d'eau est de l'eau douce.

7. Navire (15) selon l'une quelconque des revendications précédentes,
**caractérisé en ce que** l'installation à haute pression (10) utilise un générateur de pression, moyennant quoi l'eau est fournie à ultra-haute pression à ladite au moins une buse (7).

8. Navire (15) selon l'une quelconque des revendications précédentes,
**caractérisé en ce que** la structure de plate-forme (2) est montée rigide avec des positions fixes par rapport au navire.

9. Navire (15) selon la revendication 1,
**caractérisé en ce que** la structure de plate-forme (2) est montée mobile au navire (15).

10. Navire (15) selon l'une quelconque des revendications précédentes,
**caractérisé en ce que** la structure de plate-forme (2) est en outre reliée à un réservoir de stockage d'additif (35).

11. Navire (15) selon la revendication 10,
**caractérisé en ce que** les additifs sont fournis directement à partir du réservoir de stockage (35) dans l'eau sous haute pression (11) pour la ou les buse(s) (7).

12. Navire (15) selon la revendication 10,
**caractérisé en ce que** les additifs sont fournis directement à partir du réservoir de stockage (35) vers des buses d'additif indépendantes fournies sur la structure transversale avant (5).

13. Navire (15) selon les revendications 10, 11 ou 12,
**caractérisé en ce que** les additifs sont au moins un des suivants : particules, bactéries, nutriments et substances chimiques.

14. Procédé de dispersion de pétrole (20) sur l'eau, comprenant :
une structure de plate-forme (2) montée de préférence dans une partie frontale d'un navire (15), la structure de plate-forme (2) comprenant une structure transversale avant (5) pourvue de buses (7) pour rincer avec de l'eau sous haute pression (11) fournie à partir d'une installation à haute pression (10) située sur le navire (15), **caractérisé en ce que** la direction et la distance des buses (7) par rapport à la surface de l'eau ainsi que la pression de l'eau sous haute pression (11) sont ajustées, le nombre de buses (7) étant choisi de sorte qu'un grand nombre de buses à jet étroit à haute pression sont utilisées pour les distances plus grandes par rapport à la surface de l'eau et un nombre plus petit de buses à jet plus large sont utilisées pour les distances plus petites par rapport à la surface de l'eau, moyennant quoi des gouttelettes de pétrole dispersées au sein d'une plage de taille micrométrique sont obtenues, et les gouttelettes de pétrole sont mélangées dans une étendue d'eau par le mouvement vers l'avant du navire.
